# EUROPÄISCHE PATENTSCHRIFT

(11) **EP 1 754 116 B1**
(45) Veröffentlichungstag und Bekanntmachung des Hinweises auf die Patenterteilung: **23.12.2009**
(21) Anmeldenummer: 05717136.5
(22) Anmeldetag: 23.03.2005
(51) Int. Cl.: G05B 19/418

(54) **FUNKMODUL FÜR FELDGERÄTE DER AUTOMATISIERUNGSTECHNIK**
RADIO MODULE FOR FIELD APPLIANCES USED IN AUTOMATION SYSTEMS
MODULE RADIO POUR APPAREILS DE TERRAIN UTILISES EN AUTOMATISATION

(30) Priorität: 23.04.2004 DE 102004020393
(43) Veröffentlichungstag der Anmeldung: 21.02.2007
(73) Patentinhaber: Endress + Hauser Process Solutions AG, 4153 Reinach BL (CH)
(72) Erfinder: SEILER, Christian, 79424 Auggen (DE); GRIECH, Reinhard, 79540 Lörrach (DE); SPRINGMANN, Thorsten, 79650 Schopfheim (DE)
(74) Vertreter: Andres, Angelika Maria
(86) Internationale Anmeldenummer: PCT/EP2005/051347
(87) Internationale Veröffentlichungsnummer: WO 2005/103851

(56) Entgegenhaltungen:
- EP-A- 1 293 853
- WO-A-01/01366
- WO-A-02/086639
- US-A1- 2002 183 939
- US-A1- 2003 171 827

## Beschreibung

Die Erfindung betrifft ein Funkmodul zur nachträglichen Umrüstung eines herkömmlichen mit einer Sensorelektronik ausgestatteten Feldgeräts der Automatisierungstechnik auf eine Funktechnologie.

Feldgeräte werden vielfach in der Automatisierungstechnik eingesetzt um Messwerte z. B. Druck, Temperatur oder Durchfluss an Prozesskomponenten zu erfassen. In der Regel werden die Messwerte an übergeordnete Einheiten z. B. Steuereinheiten oder Leitsysteme weitergeleitet, wo sie verarbeitet oder angezeigt werden können.
Neben einer Datenübertragung vom Feldgerät zu einem Empfänger ist auch eine Datenübertragung zum Feldgeräte notwendig z. B. zur Einstellung von Konfigurier- und Parametrierdaten. Über entsprechend auszuwählende Parameter (Messeinheit, Grenzwerte etc.) können Feldgeräte so an die spezifische Messaufgabe angepasst werden.

Die Datenübertragung zwischen Feldgeräten und übergeordneten Einheiten erfolgt meist über Feldbussysteme (Hart, Profibus oder Foundation Fieldbus) mit entsprechenden Kabelverbindungen.
Erfolgt die Energieversorgung eines Feldgerätes über den Feldbus, so spricht man von busgespeisten oder 2-Leiter-Geräten. Ist neben dem Feldbus eine zusätzliche Verbindungsleitung für die Energieversorgung notwendig so spricht man von 4-Leiter-Geräten.

Seit einiger Zeit sind auch kabellose Netzwerke, so genannte Funknetze, für Sensoren bekannt. Ein derartiges Funknetzwerk ist in der Patenschrift US-6208247 näher beschrieben.

Bei den Sensoren dieses Funknetzwerks ist jedoch nur eine Datenübertragung in eine Richtung und zwar vom Sensor zur übergeordneten Einheit möglich. D. h. es können nur die reinen Messwerte an die übergeordnete Einheit übertragen werden können. Dies schließt die Möglichkeit, Feldgeräte vom Leitsystem aus zu konfigurieren oder zu parametrieren, aus. Funknetzwerke eignen sich besonders bei solchen industriellen Anwendungen, wo keine Verkabelung gewünscht oder nur mit großem Aufwand möglich ist.

Funknetzwerke für Sensoren sind bereits in dem Standard IEEE 802.15.4 näher spezifiziert. Ein Industrie-Konsortium, die ZigBee Alliance, entwickelt derzeit Anwendungsprofile, Netzwerk- und Slcherheits-Standards für verschiedene Anwendungsbereiche, dieser neue Technologie.

Sensoren (Feldgeräte) für Funknetzwerke neu zu entwickeln ist sehr aufwendig und teuer.

In der US 2003/0171827 A1 wird ein anfügfähiges Gerät bzw. ein anfügfähiges System beschrieben. Das anfügfähige Gerät bzw. System dient dazu, Datensammelvorgänge, Datenanalysevorgänge und/oder Prozesssteuerungsvorgänge auszuführen. Zuständig hierfür ist ein Mikroprozessor, dem ein Speicherelement die notwendigen Informationen über die jeweils angeschlossenen Sensoren bereitstellt. Weiterhin wird offenbart, dass das anfügfähige Gerät bzw. System dazu verwendet wird, um ein in hohem Maße skallerbares Überwachungs- und/oder Steuersystem bereitzustellen. Dieses kann an ein bestehendes Prozesssystem oder an eine bestehende Anlage angefügt werden.

Aufgabe der Erfindung ist es ein Funkmodul für Feldgeräte zu schaffen, das einfach und kostengünstig ist und das den Einsatz von herkömmlichen Feldgeräten in Funknetzwerken erlaubt.

Gelöst wird diese Aufgabe durch die im Anspruch 1 angegebenen Merkmale.

Vorteilhafte Weiterentwicklungen der Erfindung sind in den Unteransprüchen angegeben.

Die wesentliche Idee der Erfindung besteht darin, ein herkömmliches Feldgerät durch ein Funkmodul zu erweitern, das einerseits zur Datenkommunikation mit einer übergeordneten Einheit dient und andererseits auch die Energieversorgung des Feldgerätes bewirkt. Hierzu weist das Funkmodul neben einer Funkeinheit einen Mikrocontroller auf, der über eine Feldgeräteschnittstelle und eine Datenverbindungsleitung mit dem Feldgerät verbindbar ist. Zur Energieversorgung des Feldgerätes weist das Funkmodul eine Energieversorgungseinheit auf, die über eine entsprechende Verbindung das Feldgerät mit elektrischer Spannung versorgt.

Durch ein solches Funkmodul kann in Prinzip jedes herkömmliche Feldgerät einfach erweitert werden, um es in einem Funknetzwerk einzusetzen. Neben der Übertragung von Messwerten zu einer Empfängereinheit ist auch eine Übertragung von Parameterwerten zum Feldgerät mit Hilfe des Funkmoduls möglich. Da das Feldgerät ausschließlich über das Funkmodul mit Energie versorgt wird, kann ein mit einem Funkmodul ausgerüstetes Feldgerät im Prinzip an beliebigen Orten eingesetzt werden. Zur Energieversorgung stehen verschiedene Alternativen zur Vertügung Batterien, Solarzellen oder Brennstoffzellen. Es sind jedoch auch Installationen mit einer drahtgebundenen Energieversorgung denkbar. Insbesondere weil die Speicherkapazität von Batterien beschränkt ist, ist es wünschenswert, dass Feldgerät und Funkmodul zusammen möglichst wenig Energie verbrauchen. Deshalb ist im Funkmodul eine Energiesteuereinheit vorgesehen.

Weiterhin ist im Funkmodul eine Systemuhr (real time clock RTC) vorgesehen.

Als Funkübertragungsverfahren sind das FHSS- oder das DSSS-Verfahren besonders geeignet. Spezielle Vorteile bietet das UWB-Verfahren. Alle diese Funkübertragungsverfahren sind auf einen geringen Energieverbrauch ausgerichtet.

Die Datenkommunikation der einzelnen Feldgeräte untereinander erfolgt bevorzugt in der bekannten Mesh-Technik.

### Es zeigen

Fig. 1 erstes Funknetzwerk mit mehreren Feldgeräten;
Fig. 2 zweites Funknetzwerk mit mehreren Feldgeräten;
Fig. 3 Feldgerät mit Funkmodul als Blockschaltbild.

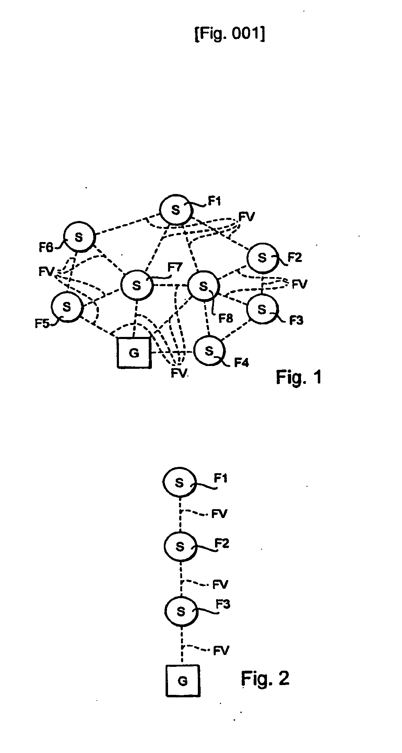

In Fig. 1 ist ein erstes Funkennetzwerk mit mehreren Feldgeräten F1, F2, F3, F4... dargestellt. Die jeweiligen Funkverbindungen FV der Feldgeräte miteinander bzw. mit einem Gateway G sind gestrichelt dargestellt. Bei dem Gateway G kann es sich um eine Fernübertragungseinheit, z. B. das Produkt "Fieldgate" der Firma Endress + Hauser handeln, die per Funk mit den einzelnen Feldgeräten kommuniziert. Mit Hilfe der Fernübertragungseinheit G ist prinzipiell eine weltweite Kommunikation zum Beispiel via Internet, GSM oder Festnetz zu einer übergeordneten Einheit möglich. So können die Messwerte der einzelnen Feldgeräte weltweit an einen beliebigen Ort übertragen und dort ausgewertet werden.

Bei den dargestellten Feldgeräten kann es sich zum Beispiel um Füllstandsmessgeräte, die bei Lagerbehältern für Rohöl oder Getreide eingesetzt werden, handeln. Die Füllstände dieser Lagerbehälter können so aus der Ferne überwacht und kontrolliert werden.

Wie aus Fig. 1 zu entnehmen ist, sind die Feldgeräte über verschiedene Funkverbindungsstrecken miteinander verbunden. Dies bedeutet bei einem Ausfall einer bestimmten Funkverbindung FV kann die Datenkommunikation über andere Funkverbindungsstrecken aufrechterhalten werden. Wenn Hindernisse (z. B. Metalltanks) eine direkte Verbindung zum nächsten Feldgerät nicht erlauben, kann die Datenkommunikation über eine andere Funkverbindung erfolgen.

Fig. 2 zeigt ein zweites Funknetzwerk mit mehreren Feldgeräten F1, F2, F3 und einem Gateway G. Die Reichweite des Funknetzwerkes wird dadurch erhöht, dass die einzelnen Feldgeräte F2, F3 als Zwischenstationen dienen. Jedes der Feldgeräte ist über zwei bzw. eine Funkverbindungsstrecke FV mit seinen nächsten Nachbarn verbunden. Die Feldgeräte F2 bzw. F3 übernehmen hier die Funktion eines Repeaters. So kann die Rechweite des Funknetzes auch bei kleinen Sendeleistungen der einzelnen Sender (Feldgeräte) erhöht werden.

Als Funkübertragungstechnologien für Funkverbindungen sind bei Feldgeräten Breitband-Technologien wie zum Beispiel Frequency hopping spread spectrum FHSS oder Direct sequence spread spectrum (DSSS) Verfahren geeignet. Als alternatives Verfahren ist die Ultrawideband UWB Technologie denkbar. Dieses Funkübertragungsverfahren benötigt sehr geringe Sendeleistungen, was bei Feldgeräten ein großer Vorteil ist, da deren Leistungsaufnahme in der Regel begrenzt ist.

Die entsprechende Empfänger- sowie Senderhardware ist aufgrund der Tatsache, dass derartige System bereits in anderen Technologiebreichen im Einsatz sind, kostengünstig und einfach einsetzbar. Aufwendige Neuentwicklungen sind hierfür nicht notwendig.

Bei dem UWB Verfahren sendet der Sender sehr kurze Sendeimpulse, die einen sehr großen Bereich mehrere GHz des Frequenzspektrums abdecken. Die Information wird in diesen sehr kurzen extrem breitbandigen Impulsen übertragen. Verzerrungen oder Absorptionen einzelner Frequenzbereiche haben keinen entscheidenden Einfluss auf die Übertragungsqualität, da auch bei kleineren Störungen immer noch ausreichend große Frequenzbereiche ungestört beim Empfänger ankommen. Wie bereits erwähnt, erlaubt diese Technologie sehr preisgünstige Sender- und Empfängereinheiten, da keine Hardware zur Einschränkung des Empfangs- und Sendebereichs auf festgelegte schmale Frequenzbereiche benötigt wird.

Durch die geringe Sendeleistung ist ein Betrieb eines entsprechenden Netzes auch ohne Funklizenzmöglich. Bei den übrigen Übertragungsverfahren ist in der Regel eine entsprechende Funklizenz für das benutzte Frequenzband notwendig.

Ein weiterer Vorteil, den diese Art der Funkübertragung bietet, ist die zentimetergenaue Ortung der einzelnen Feldgeräte nach dem Laufzeitmessungsprinzip, wie sie teilweise bei einer Radarmessung verwendet wird.

So können Feldgeräte in Anlagen sehr genau lokalisiert werden. Dies ist z. B. dann von Bedeutung, wenn Anlagepläne ungenau sind und bestimmte Feldgeräte aufgefunden werden müssen.

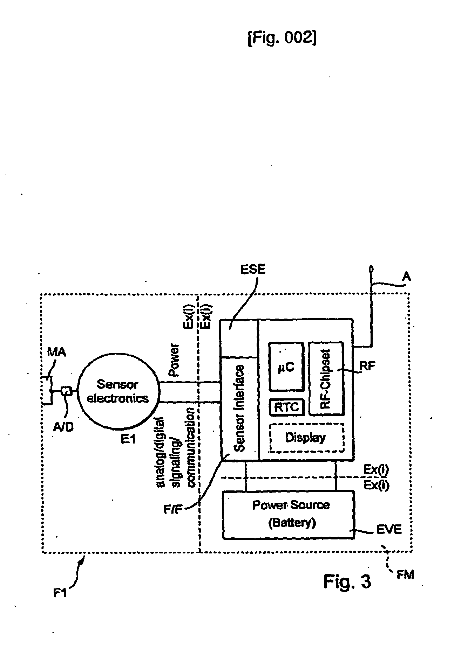

Fig. 3 zeigt ein Feldgerät mit Funkmodul als Blockschaltbild, zum Beispiel des Feldgerätes F1 gemäß Fig. 1. Das Funkmodul FM kann mit dem Feldgerät F1 auch lösbar verbunden sein. Das Funkmodul FM weist einen Mikrocontroller µC, eine Funkeinheit RF bestehend aus einem RF-Chipset, eine Energieversorgungseinheit EVE und eine Antenne A auf. Das Funkmodul FM ist über eine Feldgeräteschnittstelle FIF mit der Sensorelektronik E1 des eigentlichen Feldgeräts F1 verbunden. Im dargestellten Fall sind zwei Verbindungsleitungen für die Verbindung mit der Sensorelektronik E1 des Feldgerätes F1 vorgesehen. Über diese beiden Leitungen erfolgt sowohl die Datenkommunikation wie auch die Energieversorgung des Feldgerätes. Der Übersichtlichkeit halber ist vom eigentlichen Feldgerät F1 nur die Sensorelektronik E1 eine Messaufnehmer MA und ein Analog-Digitalwandler A/D dargestellt.

Ferner weist das Funkmodul FM eine Energiesteuereinheit ESE auf.

Bei der Energieversorgungseinheit EVS kann es sich um eine Batterie, oder Brennstoffzellen handeln. Wie aus der Zeichnung ersichtlich, ist eine Ex-Barriere zwischen der Energieversorgungseinheit EVS und dem eigentlichen Funkmodul 2 vorgesehen. Diese Ex-Barriere ermöglicht es, dass die Energieversorgungseinheit EVS auch in explosionsgefährdeten Bereichen einfach ausgewechselt werden kann.

Zwischen dem Feldgerät F1 und dem Funkmodul FM ist ebenfalls eine solche Ex-Barriere vorgesehen. Somit kann das Funkmodul FM, wenn es als separate Einheit ausgebildet ist, auch in explosionsgefährdeten Bereichen mit einem Feldgerät verbunden werden.

Das Funkmodul FM kann alternativ auch als Einheit fest im Gehäuse des Feldgerätes F1 integriert sein. Es kann aber auch, wie oben erwähnt, als separate Einheit ausgebildet sein, die lösbar mit dem Feldgerät F1 verbunden ist.

Ein solcher modularer Aufbau hat den wesentlichen Vorteil, dass auch bestehende Feldgeräte einfach auf solche Funktechnologien umgerüstet werden können. Dies gilt insbesondere für Feldgeräte mit einer typischen Feldgeräteschnittstelle (z. B. 4-20mA, HART, Profibus oder Foundation Fieldbus). Es ist jedoch auch denkbar, Feldgeräte mit digitalen Schaltausgängen wie z.B. Grenzschalter mit dem Funkmodul zu betreiben.

Insbesondere Feldgeräte die nach dem HART-Standard arbeiten eignen sich aufgrund der geringen Übertragungsgeschwindigkeit besonders gut, für den Einsatz in Funknetzwerken. Das Feldgeräte-Interface FIF ist im vorliegenden Ausführungsbeispiel an das HART-Protokoll angepasst. Messwertinformationen und Statusinformationen können so einfach als HART-Protokolle von der Sensorelektronik E1 an das Funkmodul FM übertragen werden. Konfigurationsdaten können auch von einer übergeordneten Einheit per Funk via Funkmodul an die Sensorelektronik E1 im Feldgerät F1 übertragen werden. Hierbei müssen jedoch bestimmte Timing-Erfordernisse eingehalten werden.

Über das Funkmodul FM werden die Protokolle transparent weitergeleitet.

Ein Funkmodul FM ohne Feldgerätefunktionalität kann als einfacher Repeater angesetzt werden. Ein derartiges Funkmodul dient dann nur zur Übertragung von Daten zwischen einzelnen Feldgeräten.

Da übliche Energieversorgungseinheiten (Batterien, Brennstoffzellen) eine endliche Lebensdauer besitzen und Feldgeräte im Betrieb kontinuierlich Energie verbrauchen ist ein effektives Energiemanagement notwendig.

Dieses Energiemanagement wird von der Energiesteuereinheit ESS durchgeführt.

Nur wenn Funktionen des Feldgerätes F1 oder des Funkmoduls FM benötigt werden, wird die entsprechende Einheit in die volle Betriebsbereitschaft versetzt.

Das Funkmodul FM kann in drei verschiedenen Modi betrieben werden, welche sich in ihrem Energieverbrauch unterscheiden. Die einzelnen Modi können auch gleichzeitig aktiv sein bzw. miteinander kombiniert werden.

### Polling Mode:

Das Feldgerät F1 befindet sind normalerweise in einem Schlafzustand (Sleep-Modus). Werden Daten für das Feldgerät F1 vom Funkmodul FM empfangen, wird ein entsprechendes Signal an das Feldgerät FM übertragen, das den Sleep-Modus beendet und eine Datenkommunikation zwischen Funkmodul und Feldgerät F1 ermöglicht. Jedes Funkmodul FM lauscht während definierter Zeitintervalle auf Daten für das angeschlossene Feldgerät F1.

Scheduled Transmission Mode:

Feldgerät F1 und Funkmodul FM sind nur zu gewissen Zeiten aktiviert. Während dieser Aktiv-Zeit können Messwerte erfasst und Daten übertragen werden. In der verbleibenden Zeit befinden sich beide in einem Sleep-Zustand und verbrauchen so nur sehr wenig Energie. Hierfür ist die Echtzeituhr RTC im Funkmodul FM notwendig, die die Basiszeit für die Zeitsteuerung liefert. In den Aktiv-Zeiten können Messwerte, Statusinformationen bzgl. Feldgerät, Funkmodul oder Energieversorgungseinheit übertragen werden.

Auch periodische Signale, die signalisieren, dass die Funktionseinheit einwandfrei arbeitet, können während den Aktiv-Zeiten übertragen werden. Hierzu wird eine

Heartbeat-Funktion im Funkmodul implementiert.

Event-Mode:

In diesem Modus werden die Daten vom Feldgerät F1 im Funkmodul FM zwischengespeichert und in gewissen Zeitabständen an die übergeordnete Einheit gesendet.

Treten gewisse Statusmeldungen auf, so wird das Funkmodul aktiviert, und die Daten werden übertragen.

Ähnliches gilt bei Grenzwertüberschreitungen oder Messwertänderungen.

Logging-Mode:

Das Funkmodul FM besitzt optional die Zähigkeit ,Messdaten auch über einen gewünschten Zeitraum mitzuschreiben und bei der nächsten Anforderung insgesamt zu übertragen. Dadurch besteht die Möglichkeit Messwertverläufe zu übertragen, ohne dass jeder einzelne Messwert getrennt gesendet werden muss.

Wie bereits erwähnt muss bei der Datenübertragung über unterschiedliche Übertragungsnetze das Zeitverhalten der Datenübertragung berücksichtigt werden.

Bei der transparenten Übertragung von Protokollen können Timing-Probleme auftreten. Viele Busprotokolle wie z. B. das HART-Protokoll erfordern die Einhaltung bestimmter Timing Bedingungen. Diese Bedingungen können häufig bei der Datenübertragung über Funknetzwerke mit relativ niedrigen Datenübertragungsraten nicht eingehalten werden. So darf der zeitliche Abstand zwischen zwei Paketen einer Nachricht einen bestimmten Wert nicht übersteigen.

Daten werden bei Feldbussystemen in speziellen Rahmen (Frames) verpackt bevor sie übertragen werden. Der Aufbau und die Länge dieser Rahmen hängen vom jeweiligen Feldbussystem ab. Zur Funkübertragung müssen die Rahmen gesplittet werden und am jeweiligen Empfänger wieder entsprechend zusammengesetzt werden. Nur wenn alle am Funknetzwerk beteiligten Funkmodule die entsprechende Protokolle verstehen können Daten einfach und fehlerfrei zwischen der übergeordneten Einheit und den Feldgeräten übertragen werden.

Funkmodule F und Fernübertragungseinheiten G können auch für unterschiedliche Protokolle ausgelegt sein. Die Protokolle können anhand ihrer eindeutigen Eigenschaften automatisch erkannt werden.

Jedes Funkmodul in einem Funknetzwerk besitzt eine eindeutige Funkadresse, über die es angesprochen werden kann. Bei Feldbussystemen werden die Teilnehmer ebenfalls über eindeutige Busadressen Unique Identifier identifiziert. Die Femübertragungseinheit G muss den jeweiligen Busadressen die zugehörigen Funkadressen zuweisen. Nur so können die Daten von der Fernübertragungseinheit G an das richtige Feldgerät weitergeleitet werden.

Es gibt Protokolle die speziell für Punkt zu Punkt Verbindungen vorgesehen sind. Bei derartigen Anwendungen werden Multiplexer z. B. Hart-Multiplexer eingesetzt, um auf mehrere Feldgeräte drahtgebunden zugreifen zu können.

Analog kann bei Systemen, die auf Punkt zu Punkt-Verbindungen aufbauen, ein Funk-Multiplexer eingesetzt werden, der die Aufgabe eines herkömmlichen Multiplexers übernimmt und die Daten an die entsprechenden Feldgeräte weiterleitet.

## Patentansprüche

1. Funkmodul zur nachträglichen Umrüstung eines herkömmlichen mit einer Sensorelektronik (E1) ausgestatteten Feldgeräts (F1) der Automatisierungstechnik auf eine Funktechnologie, wobei das Funkmodul (FM) über eine herkömmliche an dem Feldgerät (F1) vorgesehene Feldgeräteschnittstelle (FIF) oder einen herkömmlichen digitalen Schaltausgang lösbar mit der Sensorelektronik (E1) des Feldgeräts (F1) verbindbar ist, wobei das Funkmodul (FM) einen Mikrocontroller (µC) zur Funktionssteuerung, eine Funkeinheit (RF) zur Datenkommunikation mit einer übergeordneten Einheit (G), eine Energieversorgungseinheit (EVE) mit begrenzter Kapazität und eine Energiesteuereinheit (ESE) aufweist, wobei die Datenkommunikation zwischen dem Feldgerät (F) und einer übergeordneten Einheit (G) mit Hilfe des Funkmoduls (FM) erfolgt, wobei ausschließlich das Funkmodul (FM) das Feldgerät (F1) mit Energie versorgt und wobei die Energiesteuereinheit (ESE) die Energieversorgung der einzelnen Komponenten des Funkmoduls (FM) und des Feldgeräts (F1) so regelt (Anspruch 4), dass der Energieverbrauch von Feldgerät (F1) und Funkmodul (FM) zusammen möglichst gering ist.

2. Funkmodul nach Anspruch 1, wobei das Funkmodul so ausgestaltet ist, dass es die Kommunikationsprotokolle transparent weiterleitet.

3. Funkmodul nach Anspruch 1, wobei zwischen der Energieversorgungseinheit (EVE) und dem Funkmodul eine Ex-Barriere vorgesehen ist, wodurch die Energieversorgungseinheit (EVE) auch in explosionsgefährdeten Bereichen ausgewechselt werden kann.

4. Funkmodul nach Anspruch 1 oder 3, wobei zwischen dem Feldgerät und dem Funkmodul eine Ex-Barriere vorgesehen ist, so dass das Funkmodul auch in explosionsgefährdeten Bereichen mit dem Feldgerät verbindbar ist.

5. Funkmodul an Anspruch 1, **dadurch gekennzeichnet, dass** die Energieübertragung zu und die Datenkommunikation mit dem Feldgerät (F1) über eine gemeinsame Verbindung oder eine separate Verbindung erfolgt.

6. Funkmodul nach einem der vorergehenden Ansprüche, **dadurch gekennzeichnet, dass** das Funkmodul (FM) eine Echtzeituhreneinheit (RTC) aufweist.

7. Funkmodul nach einem der vorhergehenden Ansprüche, **dadurch gekennzeichnet, dass** die Funkeinheit (RF) als Übertragungstechnik das Frequency Hopping Spread Spectrum FHSS oder das Direct Sequence Spread Spectrum DSSS Verfahren einsetzt.

8. Funkmodul nach einem der vorhergehenden Ansprüche, **dadurch gekennzeichnet, dass** als Übertragungstechnik ein Ultra Wide Band (UWB)-Verfahren einsetzt.

9. Funkmodul nach einem der vorhergehenden Ansprüche, **dadurch gekennzeichnet, dass** die Funkeinheit FE nach dem Standard IEEE 802.15.4 arbeitet.

10. Funkmodul nach einem der vorhergehenden Ansprüche, **dadurch gekennzeichnet, dass** die Schnittstelle zwischen dem Funkmodul (FM) und dem Feldgerät (F1) eigensicher ausgelegt ist.

11. Funkmodul nach einem der vorhergehenden Ansprüche, **dadurch gekennzeichnet, dass** die Schnittstelle zwischen der Funkeinheit (RF) und der Energieversorgungseinheit (EVS) eigensicher ausgelegt ist.

12. Funkmodul nach einem der vorhergehenden Ansprüche, **dadurch gekennzeichnet, dass** Status- und konfigurierbare Grenzwerte des Feldgerätes (F1) über dessen Standardschnittstelle überwacht und selbständig gemeldet werden.

13. Funkmodul nach einem der vorhergehenden Ansprüche, **dadurch gekennzeichnet, dass** Messwerte über einen bestimmten Zeitraum aufgezeichnet werden und auf Anforderung oder selbständig als Messreihe insgesamt übertragen werden.

14. Funkmodul nach einem der vorhergehenden Ansprüche, welches eine im wesentlichen transparente Übertragung des Busprotokolls über das zugrundeliegende Funkprotokoll ermöglicht (Tunneling) und dabei insbesondere auch spezifische Timing-Erfordernisse des übertragenen Busprotokolls berücksichtigt.

15. Funkmodul nach Anspruch 13, welches automatisch ein Feldbusprotokoll erkennt und sich entsprechend auf eine Kommunikation mit den spezifischen Erfordernissen des erkannten Feldbusprotokoll einstellt.

16. Funkmodul nach einem der vorhergehenden Ansprüche, welches zusätzlich zur drahtlosen Kommunikation auf Basis eines einfachen Feldbusprotokolls über eine Internet-Protokoll-Schnittstelle (z.B. TCP/IP) verfügt und **dadurch** Internet Applikationen wie z.B. Webserver, File-Transfer oder Email-Versand unterstützt.

17. Funkmodul nach einem der vorhergehenden Ansprüche, **dadurch gekennzeichnet, dass** es als Repeater zu Verlängerung der Reichweite eines Funknetzes dient.

## Claims

1. Radio module for retrofitting a conventional automation field device (F1), which is equipped with sensor electronics (E1), to have wireless technology, where the radio module (FM) is non-permanently connected to the sensor electronics (E1) of the field device (F1) via a conventional field device interface (FIF) provided on the field device (F1) or via a conventional digital switching output,
**characterized in that** the radio module (FM) exhibits a microcontroller (µC) for function control, a radio unit (RF) for data communication with a higher-order unit (G), a power supply unit (EVE) with limited capacitance and a power control unit (ESE). The data communication between the field device (F1) and a higher-order unit (G) takes place using a radio module (FM), whereby only the radio module (FM) provides power to the field device (F1) and whereby the power control unit (ESE) controls the power supply of the individual components of the radio module (FM) and field device (F1) in such a way that the power consumption of the field device (F1) and the radio module (FM) is as low as possible.

2. Radio module as per Claim 1, where the radio module is designed in such a way that it transparently forwards the communication protocols.

3. Radio module as per Claim 1, where an Ex barrier is provided between the power supply unit (EVE) and the radio module. Consequently the power supply unit (EVE) can also be replaced in hazardous areas.

4. Radio module as per Claim 1 or 3, where an Ex barrier is provided between the field device and the radio module. Consequently the radio module can also be connected to the field device in hazardous areas.

5. Radio module as per Claim 1, **characterized in that** power transmission to, and data communication with, the field device (F1) takes place via a common connection or a separate connection.

6. Radio module as per one of the previous claims, **characterized in that** the radio module (FM) exhibits a real-time clock (RTC).

7. Radio module as per one of the previous claims, **characterized in that** the radio unit (RF) uses the frequency hopping spread spectrum (FHSS) or the direct sequence spread spectrum (DSSS) as the transmission technology.

8. Radio module as per one of the previous claims, **characterized in that** an ultra-wide band (UWB) method is used as the transmission technology.

9. Radio module as per one of the previous claims, **characterized in that** the radio unit (RF) works using IEEE standard 802.15.4.

10. Radio module as per one of the previous claims, **characterized in that** the interface between the radio module (FM) and the field device (F1) is intrinsically safe.

11. Radio module as per one of the previous claims, **characterized in that** the interface between the radio unit (RF) and the power supply unit (EVS) is intrinsically safe.

12. Radio module as per one of the previous claims, **characterized in that** status values and configurable limit values of the field device (F1) are monitored and automatically reported via the standard interface.

13. Radio module as per one of the previous claims, **characterized in that** measured values are recorded over a specific period and are transmitted on request or automatically as a series of measurements.

14. Radio module as per one of the previous claims, which enables the primarily transparent transmission of the bus protocol via the underlying radio protocol (tunneling) while particularly taking specific timing requirements of the transmitted bus protocol into account.

15. Radio module as per Claim 13, which automatically detects a fieldbus protocol and adapts itself accordingly to communication with the specific requirements of the detected fieldbus protocol.

16. Radio module as per one of the previous claims, which also has an Internet protocol interface (e.g. TCP/IP) for wireless communication on the basis of a simple fieldbus protocol, thereby supporting Internet applications such as Web servers, file transfer or e-mail.

17. Radio module as per one of the previous claims, **characterized in that** it acts as a repeater for extending the reach of a wireless network.

## Revendications

1. Module radio destiné à la transformation ultérieure d'un appareil de terrain (F1 ) traditionnel équipé d'une électronique de capteur (E1), de la technique d'automatisation vers une technologie radio, le module radio (FM) pouvant être relié au moyen d'une liaison amovible avec l'électronique de capteur (E1) de l'appareil de terrain (F1) par l'intermédiaire d'une interface d'appareil de terrain (FIF) traditionnelle prévue sur l'appareil de terrain (F1) ou d'une sortie de commutation numérique traditionnelle, le module radio (FM) comportant un microprocesseur (µC) pour la commande des fonctions, une unité radio (RF) pour la communication de données avec une unité maître (G), une unité d'alimentation en énergie (EVE) d'une capacité limitée et une unité de gestion d'énergie (ESE), la communication de données entre l'appareil de terrain (F1) et une unité maître (G) s'effectuant à l'aide du module radio (FM), le module radio (FM) alimentant exclusivement en énergie l'appareil de terrain (F1) et l'unité de gestion d'énergie (ESE) régulant l'alimentation en énergie des différents composants du module radio (FM) et de l'appareil de terrain (F1) de telle manière que la consommation d'énergie de l'appareil de terrain (F1) et celle du module radio (FM) soit la plus faible possible.

2. Module radio selon la revendication 1, le module radio étant équipé de telle manière à transmettre les protocoles de communication de façon transparente.

3. Module radio selon la revendication 1, pour lequel est prévue, entre l'unité d'alimentation en énergie (EVE) et le module radio, une barrière Ex, qui permet le remplacement de l'unité d'alimentation en énergie (EVE) également dans des zones explosibles.

4. Module radio selon la revendication 1 ou 3, pour lequel est prévue, entre l'appareil de terrain et le module radio, une barrière Ex, qui permet de relier le module radio avec l'appareil de terrain également dans des zones explosibles.

5. Module radio selon la revendication 1, **caractérisé en ce que** la transmission d'énergie vers et la communication de données avec l'appareil de terrain (F1) sont réalisées par l'intermédiaire d'une liaison commune ou d'une liaison séparée.

6. Module radio selon l'une des revendications précédentes, **caractérisé en ce que** le module radio (FM) comporte une horloge temps réel (RTC).

7. Module radio selon l'une des revendications précédentes, **caractérisé en ce que** l'unité radio (RF) met en oeuvre comme technique de transmission le procédé d'étalement du spectre à saut de fréquence (FHSS) ou le procédé d'étalement du spectre en séquence directe (DSSS).

8. Module radio selon l'une des revendications précédentes, **caractérisé en ce qu'**est mis en oeuvre comme technique de transmission un procédé de bande ultralarge (UWB).

9. Module radio selon l'une des revendications précédentes, **caractérisé en ce que** l'unité radio (RF) fonctionne d'après la norme IEEE 802.15.4.

10. Module radio selon l'une des revendications précédentes, **caractérisé en ce que** l'interface entre le module radio (FM) et l'appareil de terrain (F1) est conçue de façon intrinsèquement sûre.

11. Module radio selon l'une des revendications précédentes, **caractérisé en ce que** l'interface entre l'unité radio (RF) et l'unité d'alimentation en énergie (EVS) est conçue de façon intrinsèquement sûre.

12. Module radio selon l'une des revendications précédentes, **caractérisé en ce que** des valeurs limites d'état et configurables de l'appareil de terrain (F1) sont surveillées et signalées automatiquement par l'intermédiaire de l'interface standard de ce dernier.

13. Module radio selon l'une des revendications précédentes, **caractérisé en ce que** des valeurs mesurées sont enregistrées pendant une période déterminée et sont transmises globalement sous la forme d'une série de mesures, sur demande ou automatiquement.

14. Module radio selon l'une des revendications précédentes, lequel permet une transmission pour l'essentiel transparente du protocole de bus par l'intermédiaire du protocole radio servant de base, en tenant compte notamment des exigences spécifiques en terme de synchronisation du protocole de bus transmis.

15. Module radio selon la revendication 13, lequel reconnaît automatiquement un protocole de bus de terrain et s'adapte en conséquence à une communication avec les exigences spécifiques du protocole de bus de terrain reconnu.

16. Module radio selon l'une des revendications précédentes, lequel dispose, en plus de la communication sans fil sur la base d'un protocole de bus de terrain simple, d'une interface de protocole Internet (p. ex. TCP/IP) et supporte par ce biais des applications Internet telles que serveur Web, transfert de fichiers ou envoi d'e-mails.

17. Module radio selon l'une des revendications précédentes, **caractérisé en ce qu'**il sert de répéteur en vue d'augmenter la portée d'un réseau radio.
